# FASCICULE DE BREVET EUROPEEN

(11) **EP 3 689 663 B1**
(45) Date de publication et mention de la délivrance du brevet: **28.07.2021**
(21) Numéro de dépôt: 20154616.5
(22) Date de dépôt: 30.01.2020
(51) Int. Cl.: B60L 3/00, B60L 3/04, B60L 5/38, B60M 1/10, B60L 5/42

(54) **PROCÉDÉ DE MISE EN SÉCURITÉ DES SEGMENTS D'UN SYSTÈME D'ALIMENTATION PAR LE SOL ET SYSTÈME ASSOCIÉ**
SICHERUNGSVERFAHREN VON SEGMENTEN EINES STROMVERSORGUNGSSYSTEMS ÜBER DEN BODEN, UND ENTSPRECHENDES SYSTEM
METHOD FOR SECURING THE SEGMENTS OF A GROUND-BASED POWER SUPPLY SYSTEM AND ASSOCIATED SYSTEM

(30) Priorité: 01.02.2019 FR 1901003
(43) Date de publication de la demande: 05.08.2020
(73) Titulaire: ALSTOM Transport Technologies, 93400 Saint-Ouen (FR)
(72) Inventeur: HOURTANE, Jean-Luc, 13320 BOUC BEL AIR (FR); GAUCHE, Denis, 06620 LE BAR SUR LOUP (FR)
(74) Mandataire: Lavoix

(56) Documents cités:
- FR-A1- 2 800 020
- FR-A1- 3 019 112
- FR-A1- 3 019 113
- ALAKULA MATS ET AL: "Dynamic charging solutions in Sweden: An overview", 2017 IEEE TRANSPORTATION ELECTRIFICATION CONFERENCE AND EXPO, ASIA-PACIFIC (ITEC ASIA-PACIFIC), IEEE, 7 août 2017 (2017-08-07), pages 1-6, XP033236920, DOI: 10.1109/ITEC-AP.2017.8080781

## Description

L'invention a pour domaine celui des systèmes d'alimentation par le sol destinés à fournir, par conduction, une puissance électrique à des véhicules électriques au cours de leur déplacement.

Un tel système comporte une piste de neutre et une piste de phase, qui sont implantées dans la chaussée. La piste de phase est constituée d'une pluralité de segments conducteurs disposés les uns à la suite des autres. Un tel système comporte également une source de puissance électrique connectée à une ligne de neutre et une ligne de phase circulant le long de la chaussée. Un tel système est décrit dans la publication du brevet FR2800020 A1 (Alstom).

Un segment de la piste de phase est connecté à la ligne de neutre ou à la ligne de phase par l'intermédiaire de moyens commandés de commutation.

Les segments de la piste de phase, en surface de la chaussée, ne doivent pas présenter de risque d'électrisation pour les personnes présentes sur la chaussée.

Lorsque les moyens commandés de commutation sont réalisés à partir de contacteurs électromécaniques, dont l'état de repos est stable, le segment est déconnecté de la ligne de phase par un contacteur normalement ouvert et est connecté à la ligne de neutre par un contacteur normalement fermé.

Pour assurer un nombre de commutations élevé, il est cependant préférable de réaliser les moyens commandés de commutation à partir de semi-conducteurs de puissance.

La mise en sécurité d'un segment est alors assurée par la fermeture d'un premier transistor reliant le segment à la ligne de neutre et l'ouverture d'un second transistor reliant le segment à la ligne de phase.

Cependant, par leurs modes de défaillance différents de ceux d'un contacteur électromécanique, la mise en œuvre de semi-conducteurs impose de prendre des dispositions spécifiques pour assurer la sécurité des personnes.

L'invention a pour but de répondre à ce problème.

Pour cela l'invention a pour objet un système d'alimentation par le sol comportant : une piste de neutre et une piste de phase implantées au niveau d'une chaussée, la piste de phase étant constituée d'une pluralité de segments, conducteurs et disposés les uns à la suite des autres ; une source de puissance électrique connectée à une ligne de neutre et à une ligne de phase circulant le long de la chaussée ; un dispositif de commutation comportant, pour l'alimentation d'un segment conducteur associé, un premier commutateur de connexion dudit segment conducteur à la ligne de neutre, un second commutateur commandé de connexion dudit segment conducteur à la ligne de phase et un contrôleur de commande d'un état ouvert ou fermé des premier et second commutateurs, caractérisé en ce que le contrôleur est propre à vérifier, à chaque instant, une condition selon laquelle le segment conducteur associé est connecté à la ligne de neutre lorsque ledit segment conducteur ne doit pas être électrifié pour le passage d'un véhicule, et, en cas de vérification négative de ladite condition, le contrôleur est propre à déclencher le repli du système dans une configuration de sécurité dans laquelle les lignes de neutre et de phase sont placées au potentiel de la ligne de neutre.

Suivant des modes particuliers de réalisation, le système d'alimentation par le sol comporte une ou plusieurs des caractéristiques suivantes, prises isolément ou suivant toutes les combinaisons techniquement possibles :
- chaque contrôleur comporte un port de sortie relié au segment conducteur auquel il est associé, et un port d'entrée relié à la ligne de neutre, et est propre, pour vérifier ladite condition, à émettre périodiquement un signal de test sur le port de sortie et à vérifier la réception du signal de test sur le port d'entrée, la réception du signal de test indiquant que le segment conducteur associé est connecté à la ligne de neutre.
- les contrôleurs des segments conducteurs d'un groupe de segments conducteurs sont connectés en série le long d'une première ligne pilote entre une première unité pilote d'émission d'un premier signal pilote et une seconde unité pilote de réception du premier signal pilote, chaque contrôleur étant propre à interrompre la retransmission du premier signal pilote dès que la vérification de ladite condition est négative, et dans lequel le système comporte en outre un disjoncteur de connexion de la ligne de phase à une borne de phase de la source de puissance, la seconde unité pilote étant propre à commander un état ouvert ou fermé du disjoncteur, la seconde unité pilote étant configurée pour basculer dans l'état ouvert le disjoncteur lorsqu'elle ne reçoit plus le premier signal pilote.
- le système d'alimentation par le sol comporte un court-circuiteur de connexion d'une borne de neutre de la source de puissance à la ligne de phase, la seconde unité pilote étant propre à commander un état ouvert ou fermé du court-circuiteur, la seconde unité de pilote étant propre à basculer dans l'état fermé le court-circiteur après avoir basculé dans l'état ouvert le disjoncteur.
- les contrôleurs des segments conducteurs d'un groupe de segments conducteurs sont connectés en parallèle le long d'une seconde ligne pilote à la seconde unité pilote, la seconde unité pilote étant propre à émettre un second signal pilote sur la seconde ligne pilote, et, lors de la perte du premier signal pilote, la seconde unité pilote est propre à interrompre l'émission du second signal pilote, et chaque contrôleur des segments conducteurs du groupe de segments conducteurs, lors de la perte du second signal pilote, étant propre à commander en fermeture les premier et second commutateurs associés de manière à porter la ligne de phase au potentiel de la ligne de neutre.
- le court-circuiteur est associé à au moins un composant statique, permettant de connecter une borne de neutre de la source de puissance à la ligne de phase plus rapidement que le court-circuiteur et dans lequel la seconde unité pilote est propre à commander le basculement dans l'état fermé du composant statique après avoir basculé dans l'état ouvert le disjoncteur, avantageusement en même temps qu'elle commande le basculement dans l'état fermé le court-circiteur.

L'invention a également pour objet un procédé de mise en sécurité du système d'alimentation par le sol précédent, comportant les étapes consistant à : vérifier périodiquement, par un contrôleur, une condition selon laquelle le segment conducteur associé est connecté à la ligne de neutre alors que ledit segment conducteur ne doit pas être électrisé pour le passage d'un véhicule ; et, en cas de vérification négative de ladite condition ; déclencher, par le contrôleur, le repli du système dans une configuration de sécurité dans laquelle les lignes de neutre et de phase sont placées au potentiel de la ligne de neutre.

Suivant des modes particuliers de réalisation, le procédé comporte une ou plusieurs des caractéristiques suivantes, prises isolément ou suivant toutes les combinaisons techniquement possibles :
- l'étape de vérification de ladite condition est réalisée par la réception, par le contrôleur, du signal de test indiquant la connexion effective du segment associé à la ligne de neutre.
- l'étape de déclenchement du repli du système dans une configuration de sécurité consiste à : interrompre la retransmission, par le contrôleur, du premier signal pilote, et ouvrir, suite à la perte de la réception du premier signal pilote par la seconde unité pilote, le disjoncteur pour isoler la ligne de phase de la source de puissance.
- l'étape de déclenchement du repli du système dans une configuration de sécurité consiste, après avoir ouvert le disjoncteur rapide, à fermer, par la seconde unité pilote, un court-circuiteur de connexion d'une borne de neutre de la source de puissance à la ligne de phase.
- l'étape de déclenchement du repli du système dans une configuration de sécurité consiste également à : interrompre, par la seconde unité pilote, l'émission d'un second signal pilote, et commander, lors de la perte du second signal pilote, la fermeture, par chaque contrôleur de la pluralité de contrôleurs destinés à recevoir le second signal pilote, des premier et second transistors associés.
- l'étape de déclenchement du repli du système dans une configuration de sécurité consiste à fermer au moins un contacteur statique associé au court-circuiteur et permettant de connecter une borne de neutre de la source de puissance à la ligne de phase plus rapidement que le court-circuiteur, après avoir basculé dans l'état ouvert le disjoncteur.

L'invention et ses avantages seront mieux compris à la lecture de la description détaillée qui va suivre d'un mode de réalisation particulier, donné uniquement à titre d'exemple non limitatif, la description étant faite en se référant aux dessins annexés sur lesquels :
[Fig 1] la figure 1 est une représentation schématique du système d'alimentation par le sol selon l'invention pour un groupe de segments, le système se trouvant dans un état initial de détection de l'électrisation d'un des segments du groupe ;
[Fig 2] la figure 2 est une représentation d'un commutateur commandé du système de la figure 1 ;
[Fig 3] la figure 3 est une représentation sous forme de blocs du procédé de mise en sécurité du groupe de segments de la figure 1 ; et,
[Fig 4] la figure 4 représente le système de la figure 1, mais dans un état final de mise en sécurité du groupe de segments.

De manière générale, dans la présente description, un premier composant référencé par un chiffre comportant un premier indice est similaire à un second composant référencé par le même chiffre mais comportant un second indice.

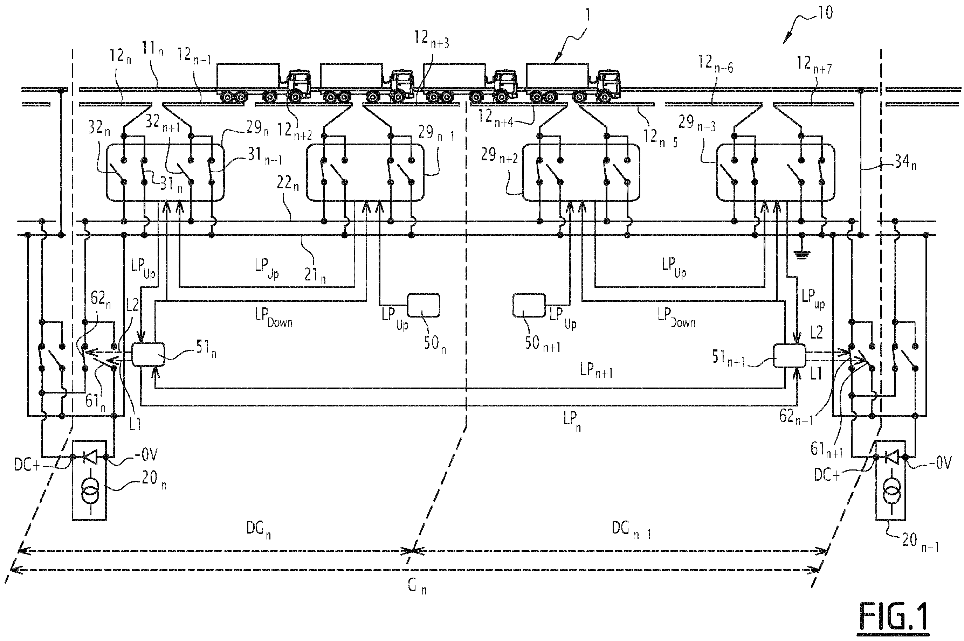

La figure 1 représente un système 10 d'alimentation par le sol permettant à un véhicule électrique, tel qu'un camion 1, de collecter une puissance électrique au cours de son déplacement.

Le système 10 comporte une piste de neutre et une piste de phase, disposées en parallèle l'une de l'autre et affleurantes à la surface de la chaussée. De cette manière, un frotteur équipant un véhicule électrique peut, par contact glissant sur les pistes de neutre et de phase, collecter une puissance électrique.

La piste de phase est subdivisée en une pluralité de segments longitudinaux disposés les uns à la suite des autres, tout en ménageant entre deux segments consécutifs une isolation électrique.

Le système 10 est subdivisé autour de groupes de segments. Sur la figure 1, un seul groupe Gn est représenté. Par exemple, un groupe correspond à l'association de huit segments consécutifs. Les segments du groupe Gn sont référencés 12n à 12n+7 sur la figure 1.

La piste de neutre correspondant au groupe Gn est référencée 11n.

Pour l'alimentation en puissance électrique du groupe Gn, le système 10 comporte une première source de puissance électrique 20n, à une extrémité du groupe Gn, et une seconde source de puissance électrique 20n+1, à l'autre extrémité du groupe Gn. Dans le mode de réalisation présenté ici, une source est en fait partagée entre deux groupes voisins.

Une source peut par exemple être constituée par une sous-station d'alimentation électrique.

Pour alimenter les segments 12n à 12n+7 et la piste de neutre 11n à partir des première et seconde sources de puissance électrique 20n et 20n+1, le système 10 comporte une ligne de neutre 21n, respectivement une ligne de phase 22n, connectée entre les bornes de neutre, respectivement de phase, des sources 20n et 20n+1.

La ligne de neutre 21n est portée à un potentiel bas, égal au potentiel de la terre, noté -0V. La ligne de phase 22n est portée à un potentiel haut, noté DC+.

Les lignes de neutre et de phase, 21n et 22n, circulent le long de la chaussée.

La piste de neutre 11n est connectée directement à la ligne de neutre 21n par une liaison 34n.

Pour la connexion de chaque segment 12n à 12n+7 à la ligne de neutre 21n ou à la ligne de phase 22n, le système 10 comporte des moyens de commutation 29n à 29n+3.

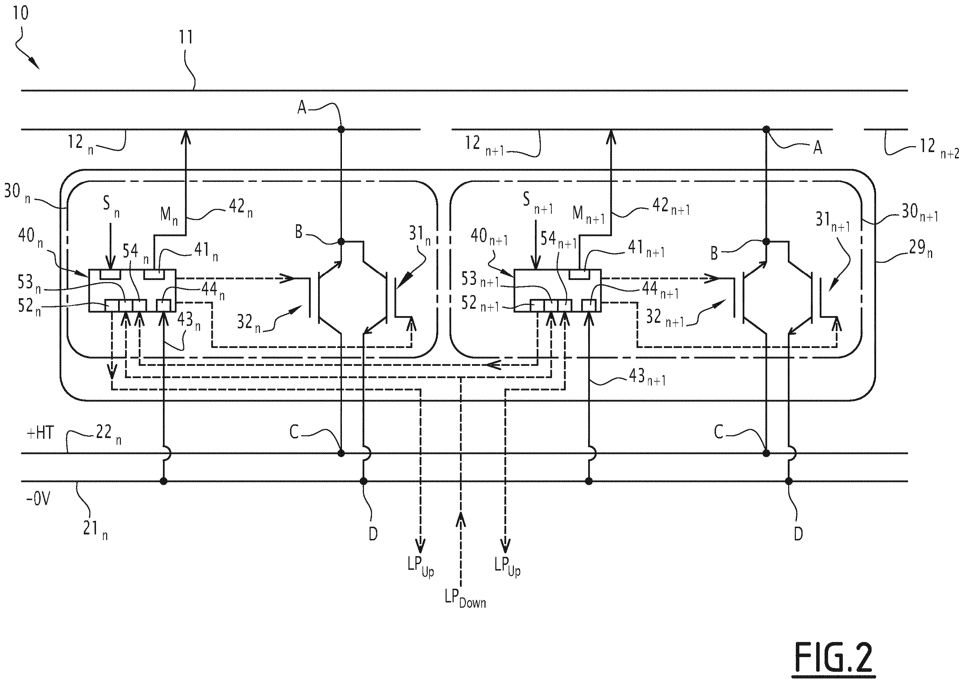

Le moyen de commutation 29n est représenté plus en détail à la figure 2. Une description similaire pourrait être faite pour les moyens de commutation 29n+1 à 29n+3.

Le moyen de commutation 29n associe des dispositifs de commutation 30n et 30n+1 pour la connexion du segment 12n, respectivement du segment 12n+1, aux lignes de neutre et/ou de phase.

En d'autres termes, le système 10 et notamment le moyen de commutation 29n comprend un dispositif de commutation 30n s'étendant entre, d'une part, les lignes de neutre et de phase et, d'autre part, le segment 12n et un dispositif de commutation 30n s'étendant entre, d'une part, les lignes de neutre et de phase et, d'autre part, le segment 12n+1.

Le dispositif de commutation 30n comporte un premier transistor 31n propre, lorsqu'il est commandé de manière à être passant, à connecter le segment 12n à la ligne de neutre 21n et lorsqu'il est commandé à l'état bloquant, à isoler le segment 12n de la ligne de neutre 21n.

Le dispositif de commutation 30n comporte un second transistor 32n propre, lorsqu'il est commandé de manière à être passant, à connecter le segment 12n à la ligne de phase 22n et lorsqu'il est commandé à l'état bloquant, à isoler le segment 12n de la ligne de phase 22n.

Les premier et second transistors 31n et 32n sont des transistors de puissance, par exemple des transistors bipolaires à grille isolée (IGBT).

Le premier transistor 31n est connecté de manière à ce que son émetteur soit connecté à un nœud D de la ligne de neutre 21n et son collecteur soit connecté à un nœud commun B. Le second transistor 32n est connecté de manière à ce que son collecteur soit connecté à un nœud C de la ligne de phase 22n et son émetteur au nœud commun B. Le nœud commun B est connecté au segment 12n au point A.

Le dispositif de commutation 30n comporte également, associé au segment 12n, un contrôleur 40n.

A chaque instant, le contrôleur 40n est propre à piloter l'état ouvert (état bloquant) ou fermé (état passant) des premier et second transistors 31n et 32n en appliquant des signaux de commutation adaptés sur la grille de chacun de ces deux transistors.

Pour commander les transistors, le contrôleur 40n est propre à prendre en compte un signal binaire Sn indiquant, par exemple lorsqu'il prend la valeur unité, que le segment 12n doit être électrifié pour le passage d'un véhicule. La manière de générer le signal binaire Sn est hors du périmètre de la présente invention et est connue de l'homme du métier.

Pour assurer un premier niveau de sécurité du système 10, qui est mis en œuvre lorsque le signal Sn prend la valeur nulle, c'est-à-dire lorsque le segment 12n ne doit pas être électrifié, le contrôleur 40n est propre à vérifier que le segment 12n est connecté à la ligne de neutre 21n. Pour ce faire, le contrôleur 40 comporte un port de sortie 41n qui est relié au segment 12n par une ligne 42n et un port d'entrée 44n qui est relié à la ligne de neutre 21n, par une ligne 43n connectée à proximité du nœud de connexion D.

Lorsque le signal Sn est nul, le contrôleur 40n est propre à générer un signal de test Mn et à l'appliquer périodiquement sur son port de sortie 41n.

Dans un état de fonctionnement nominal des premier et second transistors, lorsque le premier transistor 31n est dans l'état fermé, le signal de test Mn parcourt la ligne 42n, le segment 12n, puis la maille ABD à travers le premier transistor 31n passant, puis la ligne de neutre 21n et enfin la ligne 43n, pour être reçu sur le port d'entrée 44n.

La détection du signal de test Mn sur le port d'entrée 44n permet au contrôleur 40n de confirmer le bon état des transistors et la mise au potentiel bas +0V (potentiel de neutre) du segment 12n.

Une description similaire pourrait être faite pour le dispositif de commutation 30n+1, qui comporte un premier transistor 31n+1 et un second transistor 32n+1, ainsi qu'un contrôleur 40n+1 réalisant l'acquisition d'un signal Sn+1 et la vérification de la mise à la terre du segment 12n+1 par l'émission et la détection d'un signal de test Mn+1.

En cas de perte de détection du signal de test par un contrôleur, par exemple le contrôleur 40n dans la suite de notre exemple, un second niveau de sécurité est mis en œuvre. Les moyens du système 10 pour la mise en œuvre de ce second niveau vont maintenant être décrits.

En se référant à nouveau à la figure 1, le groupe Gn de segments est subdivisé en deux demi-groupes, DGn et DGn+1. Au niveau d'un groupe, le système 10 est symétrique par rapport à cette subdivision en deux demi-groupes.

Le demi-groupe de segments DGn est équipé d'une première unité 50n et d'une seconde unité 51n.

La première unité 50n est propre à générer un premier signal pilote LP_{Up} et à l'injecter à une première extrémité d'une liaison pilote le long de laquelle les différents contrôleurs 40n à 40n+3 sont connectés en série. La seconde extrémité de la ligne pilote est connectée à la seconde unité 51n.

Plus précisément, comme illustré sur la figure 2, le contrôleur 40n reçoit le premier signal pilote LP_{Up} sur un port d'entrée 54n et est propre à le réémettre sur un port de sortie 52n. De même, le contrôleur 40n+1 reçoit le premier signal pilote LP_{Up} sur un port d'entrée 54n+1 et est propre à le réémettre sur un port de sortie 52n+1.

Le premier signal pilote LP_{Up} est ainsi propagé de la première unité 50n vers la seconde unité 51n, en passant d'un contrôleur à l'autre d'un demi-groupe.

La seconde unité 51n est propre à générer des signaux de commande L1 et L2 pour commander l'état ouvert ou fermé respectivement d'un court-circuiteur 61n et d'un disjoncteur rapide 62n.

Le disjoncteur rapide 62n est placé entre une borne de phase de la source 20n et la ligne de phase 22n. Dans l'état fermé du disjoncteur 62n, la ligne de phase 22n est portée au potentiel haut DC+. Le composant 62, connu de l'homme du métier, est par exemple un disjoncteur rapide ayant un temps d'ouverture de l'ordre de 20 ms ou encore un disjoncteur hyper rapide ayant un temps d'ouverture de l'ordre de 2 ms. Il est à noter que ce temps d'ouverture caractéristique constitue une échelle de rapidité permettant de qualifier les composants du présent système d'alimentation.

Le court-circuiteur 61n est placé entre une borne de neutre de la source 20n et la ligne de phase 22n. Lorsque le court-circuiteur 61n est fermé la ligne de phase 22n est portée au potentiel bas -0V. Le composant 61 est du type contacteur électromécanique.

La seconde unité 51n est également propre à générer un second signal pilote LP_{Down} et à l'injecté à une extrémité d'une autre liaison pilote à laquelle les différents contrôleurs 40n à 40n+4 du demi-groupe sont connectés en parallèle.

Plus précisément, comme illustré sur la figure 2, le second signal pilote LP_{Down} est appliqué sur un port d'entrée 53n du contrôleur 40n et sur le port 53n+1 du contrôleur 40n+1.

Une description similaire pourrait être faite pour l'autre demi-groupe DGn+1, qui comporte : une première unité pilote 50n+1 propre à adresser un premier signal pilote LP_{Up} à une seconde unité pilote 51n+1, en passant par chacun des contrôleurs 40n+4 à 40n+7 associés aux segments du demi-groupe DGn+1 en tant que relais du premier signal pilote LP_{Up} ; la seconde unité 51n+1 est propre à commander l'état d'un disjoncteur rapide 62n+1 et d'un court-circuiteur 61n+1 ; la seconde unité 51n+1 est propre à adresser un second signal pilote LP_{Down} à chacun des contrôleurs associés aux segments du demi-groupe DGn+1.

Enfin, la seconde unité 51n du demi-groupe DGn est propre à adresser un troisième signal pilote LPn à la seconde unité 51n+1 du demi-groupe DGn+1 et, de manière symétrique, la seconde unité 51n+1 du demi-groupe DGn+1 est propre à adresser un troisième signal pilote LPn+1 à la seconde unité 51n du demi-groupe DGn.

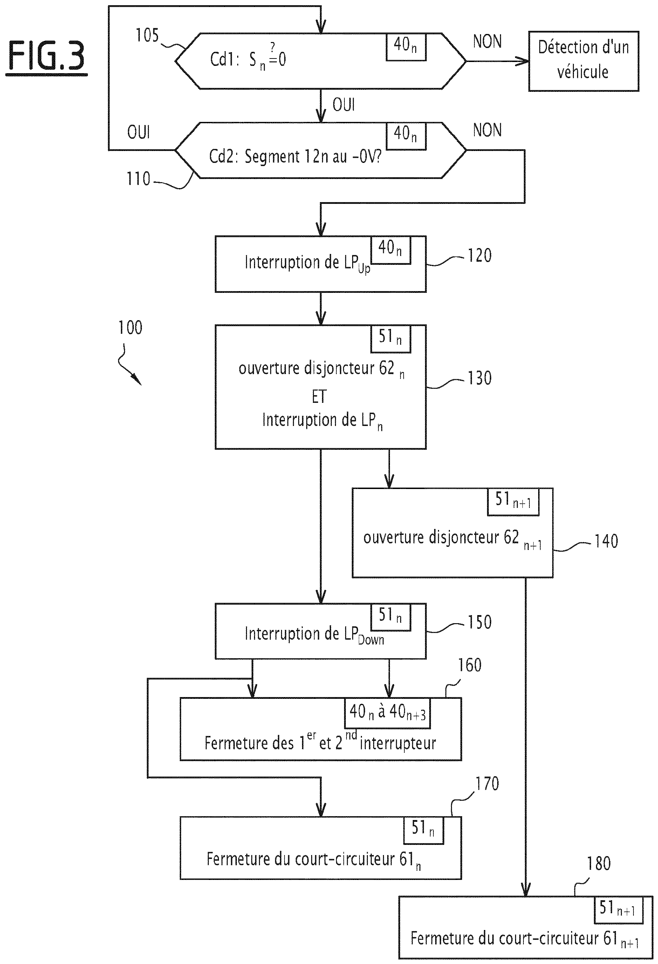

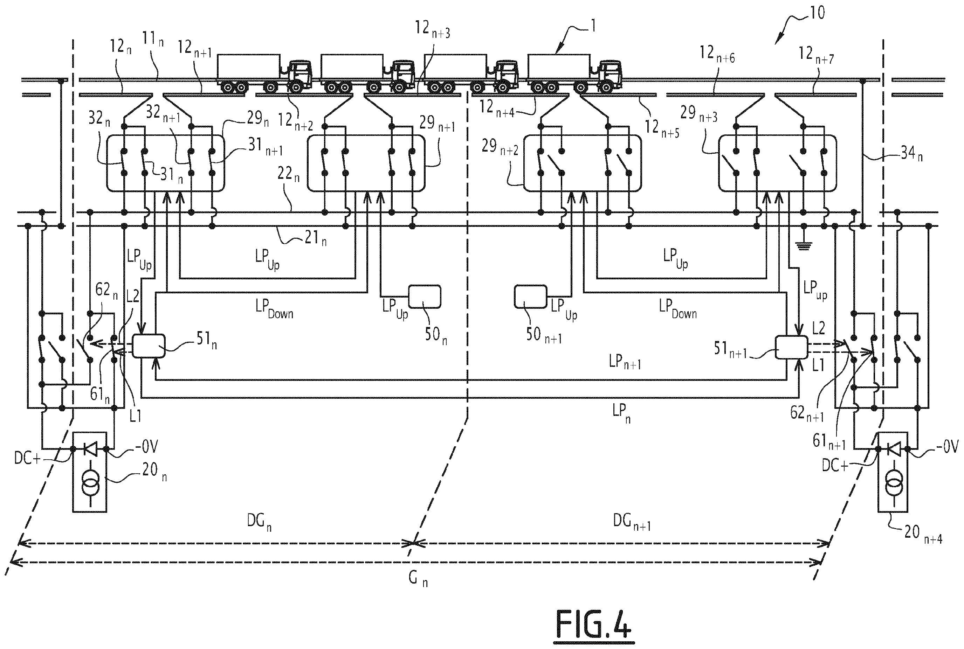

Le procédé de mise en sécurité du système 10 va maintenant être décrit en référence à la figure 3 pour passer de l'état initial du système représenté à la figure 1 à l'état final du système représenté à la figure 4.

Périodiquement, le contrôleur 40n vérifie, étape 105, une première condition Cd1 relative à l'état du segment 12n en vérifiant la valeur du signal Sn. Si le signal Sn est égal à l'unité, le procédé de mise en sécurité se termine. En effet, le segment 12n doit être électrisé pour le passage d'un véhicule.

En revanche, si le signal Sn est égal à zéro, c'est-à-dire si le segment 12n ne doit pas être électrifié, alors à l'étape 110, le contrôleur 40n vérifie une seconde condition Cd2 relative au fait que le segment 12n est correctement connecté à la ligne de neutre 21n. Cette condition est vérifiée par l'émission et la réception du signal de test Mn à l'instant considéré.

Si le contrôleur 40n reçoit le signal Mn, le procédé 100 retourne à l'étape 105 pour l'instant d'échantillonnage suivant. En variante, les étapes 105 et 110 sont réalisées en une seule tâche par une fonction logique telle que : ((Sn = 0) ET (Segment 12n au -0V)).

En revanche, si le contrôleur 40n ne reçoit pas le signal Mn, cela signifie que le segment 12n n'est pas, de manière certaine, au potentiel bas -0V. Cette situation présente un risque potentiel pour la sécurité des personnes sur la chaussée à proximité du segment 12n.

Pour la mise en sécurité de l'installation, le procédé 100 passe alors à l'étape 120, réalisée par le contrôleur 40n, qui consiste à interrompre la retransmission du premier signal pilote LP_{Up}.

A l'étape 130, la seconde unité pilote du demi groupe auquel appartient le segment considéré, en l'occurrence la seconde unité pilote 51n, qui ne reçoit plus le premier signal pilote LP_{Up}, déclenche l'ouverture du disjoncteur rapide 62n en appliquant un signal de commande L2 adapté.

La seconde unité pilote 51n interrompt également la transmission du troisième signal pilote LPn à destination de la seconde unité pilote 51n+1 du demi-groupe DGn+1 associé.

A l'étape 140, la seconde unité pilote 51n+1 du demi-groupe DGn+1 associé ne recevant plus le troisième signal pilote LPn, ouvre le disjoncteur rapide 62n+1 en appliquant un signal de commande L2 adapté.

De la sorte, la ligne de phase 22n n'est plus connectée à la haute tension délivrée par la source 20n ou par la source 20n+1.

A cette étape, la déconnection des sources de tension 20n et 20n+1 de la ligne de phase 22n n'est pas suffisante pour assurer la mise en sécurité de l'installation. Il faut en complément de la séparation de la source d'alimentation, court-circuiter la ligne de phase 22n à un potentiel très proche de celui de la terre.

Ceci va être réalisé par les contacteurs 61n et 61n+1. Cependant, le basculement des contacteurs 61 s'effectue dans un temps trop long compte tenu de la dimension physique des contacteurs électromécaniques utilisés pour cette fonction.

C'est pourquoi, le signal pilote LP_{Down} va être utilisé pour permettre la mise en sécurité rapide de l'installation par la fermeture d'un composant statique.

Pour que cette fonction soit réalisée en sécurité, elle doit être avantageusement redondée, soit en utilisant plusieurs composants statiques, en parallèle avec les court-circuiteurs à technologie de contacteurs électromécaniques, soit en fermant simultanément l'ensemble des contacteurs statiques d'un même demi groupe.

Dans le mode de réalisation décrit ici en détail, la mise en court-circuit rapide est réalisée en utilisant, en tant que contacteurs statiques, les composants 31 et 32 simultanément. En variante, ou en complément il est cependant possible d'utiliser un court-circuiteur statique redondé à la source 20 sur le composant 61. Le dispositif court-circuiteur statique est, par exemple, associé au composant 61 et est par exemple connecté en parallèle du composant 61. Le dispositif court-circuiteur statique comprend, par exemple, des interrupteurs de puissance tels que des transistors.

Ainsi, le procédé 100 se poursuit avantageusement de la manière suivante.

Parallèlement à l'étape 140, à l'étape 150, la seconde unité 51n interrompt l'émission du second signal pilote LP_{Down}.

A l'étape 160, au niveau de chacun des contrôleurs 40n à 40n+3 du demi-groupe DGn associé à l'unité 51n, l'interruption de la réception du second signal pilote LP_{Down} conduit chaque contrôleur à commander en fermeture les premier et second transistors qu'ils commandent. Ainsi, le contrôleur 40n bascule en fermeture les premier et second transistors 31n et 32n. Les contrôleurs 40n+1, 40n+2 et 40n+3 ferment également les premier et second transistors qu'ils commandent.

De cette manière, les lignes de neutre 21n et de phase 22n sont placées au même potentiel bas -0V.

Enfin, à l'étape 170, la seconde unité pilote 51n commande en fermeture le court-circuiteur 61n. Pour ce faire, il émet un signal L1 adapté conduisant à la fermeture de l'interrupteur 61 n.

De manière parallèle, dans l'autre demi-groupe DGn+1, à l'étape 180, la seconde unité pilote 51n+1 commande en fermeture le court-circuiteur 61n+1.

A l'issue de la mise en œuvre du procédé 100, l'ensemble du groupe de segments Gn est placé dans un état de repli garantissant qu'aucun des segments 12n à 12n+7 ne soit électrisé et qu'ils soient tous connectés à un potentiel bas par des court-circuiteurs statiques, puis électromécaniques. De la sorte la sécurité des personnes est assurée.

Dans cet état de repli les segments n'étant pas alimentés, les véhicules circulant sur le tronçon de la chaussée correspondant à ce groupe de segments ne peuvent capter une puissance électrique pour leur déplacement ou la recharge de leurs moyens de stockage d'énergie. En conséquence, ils roulent en autonomie.

En variante, la seconde unité 51n+1 réalise également l'étape 150 (interruption de l'émission du second signal pilote LP_{Down}) et les contrôleurs des segments du groupe Gn+1 réalisent alors l'étape 160 (fermeture des premier et second transistors). Ces étapes pour l'autre demi-groupe ne sont pas nécessaires car les temps de transfert de l'information pour aller fermer les premier et second transistors alimentant chacun des segments de l'autre demi-groupe sont trop importants pour répondre aux critères normatifs de mise en sécurité rapide.

Il est à noter que selon l'invention, le segment origine du défaut, le segment 12n dans notre exemple, est finalement mis en sécurité par les contrôleurs des segments du même demi-groupe Gn, les contrôleurs 40n+1, 40n+2 et 40n+3 dans notre exemple.

Dans l'exemple présenté ci-dessus un demi-groupe est constitué de quatre segments, mais dans l'application cible, le nombre de segments par demi-groupe et par conséquent le nombre de contrôleurs concernés est de l'ordre de plusieurs dizaines.

Bien évidemment l'invention pourrait être mise en œuvre pour d'autres façons de regrouper les segments du système.

Le système venant d'être décrit permet de répondre par exemple aux contraintes normatives définies par la norme européenne EN 50122-1 : 2011. Selon cette norme, le temps de mise en sécurité d'un segment pouvant être porté à 750 Volts nominal et 900 Volts maximal ne doit pas excéder 20 millisecondes.

L'emploi de disjoncteurs rapides permet d'atteindre cet objectif.

## Revendications

1. Système d'alimentation par le sol (10) comportant :
- une piste de neutre (11n) et une piste de phase implantées au niveau d'une chaussée, la piste de phase étant constituée d'une pluralité de segments (12n à 12n+7), conducteurs et disposés les uns à la suite des autres ;
- une source (20n) de puissance électrique connectée à une ligne de neutre (21n) et à une ligne de phase (22n) circulant le long de la chaussée ;
- un dispositif de commutation (30n) comportant, pour l'alimentation d'un segment conducteur (12n) associé, un premier commutateur (31n) de connexion dudit segment conducteur (12n) à la ligne de neutre (21n), un second commutateur commandé (32n) de connexion dudit segment conducteur (12n) à la ligne de phase (22n) et un contrôleur (40n) de commande d'un état ouvert ou fermé des premier et second commutateurs, dans lequel le contrôleur (40n) est propre à vérifier, à chaque instant, une condition selon laquelle le segment conducteur (12n) associé est connecté à la ligne de neutre (11n) lorsque ledit segment conducteur (12n) ne doit pas être électrifié pour le passage d'un véhicule, et, en cas de vérification négative de ladite condition, le contrôleur (40n) est propre à déclencher le repli du système (10) dans une configuration de sécurité **caractérisé en ce que** dans la configuration de sécurité les lignes de neutre et de phase sont placées au potentiel de la ligne de neutre.

2. Système d'alimentation par le sol (10) selon la revendication 1, dans lequel chaque contrôleur (40n) comporte un port de sortie (41n) relié au segment conducteur (12n) auquel il est associé, et un port d'entrée (43n) relié à la ligne de neutre (21n), et est propre, pour vérifier ladite condition, à émettre périodiquement un signal de test (Mn) sur le port de sortie et à vérifier la réception du signal de test sur le port d'entrée, la réception du signal de test indiquant que le segment conducteur associé est connecté à la ligne de neutre.

3. Système d'alimentation par le sol (10) selon la revendication 1 ou la revendication 2, dans lequel les contrôleurs des segments conducteurs d'un groupe de segments conducteurs sont connectés en série le long d'une première ligne pilote entre une première unité pilote (50n) d'émission d'un premier signal pilote (LP_{Up}) et une seconde unité pilote (51n) de réception du premier signal pilote, chaque contrôleur (40n) étant propre à interrompre la retransmission du premier signal pilote (LP_{Up}) dès que la vérification de ladite condition est négative, et dans lequel le système comporte en outre un disjoncteur (62n) de connexion de la ligne de phase à une borne de phase de la source (20n) de puissance, la seconde unité pilote (51n) étant propre à commander un état ouvert ou fermé du disjoncteur, la seconde unité pilote (51n) étant configurée pour basculer dans l'état ouvert le disjoncteur (62n) lorsqu'elle ne reçoit plus le premier signal pilote (LP_{Up}).

4. Système d'alimentation par le sol (10) selon la revendication 3, comportant un court-circuiteur (61n) de connexion d'une borne de neutre de la source (20n) de puissance à la ligne de phase (22n), la seconde unité pilote (51n) étant propre à commander un état ouvert ou fermé du court-circuiteur, la seconde unité de pilote (51n) étant propre à basculer dans l'état fermé le court-circiteur (61n) après avoir basculé dans l'état ouvert le disjoncteur (62n).

5. Système d'alimentation par le sol (10) selon la revendication 3 ou 4, dans lequel les contrôleurs (40n à 40n+3) des segments conducteurs d'un groupe de segments conducteurs sont connectés en parallèle le long d'une seconde ligne pilote à la seconde unité pilote (51n), la seconde unité pilote étant propre à émettre un second signal pilote (LP_{Down}) sur la seconde ligne pilote, et, lors de la perte du premier signal pilote (LP_{Up}), la seconde unité pilote (51n) est propre à interrompre l'émission du second signal pilote, et chaque contrôleur (40n à 40n+3) des segments conducteurs du groupe de segments conducteurs, lors de la perte du second signal pilote, étant propre à commander en fermeture les premier et second commutateurs associés de manière à porter la ligne de phase (22n) au potentiel de la ligne de neutre (21n).

6. Système d'alimentation par le sol (10) selon la revendication 4, dans lequel le court-circuiteur est associé à au moins un composant statique, permettant de connecter une borne de neutre de la source (20n) de puissance à la ligne de phase (22n) plus rapidement que le court-circuiteur et dans lequel la seconde unité pilote (51n) est propre à commander le basculement dans l'état fermé du composant statique après avoir basculé dans l'état ouvert le disjoncteur (62n), avantageusement en même temps qu'elle commande le basculement dans l'état fermé le court-circiteur.

7. Procédé de mise en sécurité d'un système d'alimentation par le sol (10) conforme à l'une quelconque des revendications 1 à 6, dans laquelle ladite procédure comporte les étapes consistant à :
- vérifier (105) périodiquement, par un contrôleur (40n), une condition selon laquelle le segment conducteur (12n) associé est connecté à la ligne de neutre (21n) alors que ledit segment conducteur (12n) ne doit pas être électrisé pour le passage d'un véhicule ; et, en cas de vérification négative de ladite condition ;
- déclencher, par le contrôleur (40n), le repli du système (10) dans une configuration de sécurité **caractérisé en ce que** dans la configuration de sécurité les lignes de neutre et de phase sont placées au potentiel de la ligne de neutre.

8. Procédé selon la revendication 7, dans lequel, le système d'alimentation par le sol étant selon la revendication 2, l'étape de vérification de ladite condition est réalisée par la réception, par le contrôleur (40n), du signal de test (Mn) indiquant la connexion effective du segment associé (12n) à la ligne de neutre (21n).

9. Procédé selon la revendication 7 ou la revendication 8, dans lequel, le système d'alimentation par le sol étant selon la revendication 3, l'étape de déclenchement du repli du système (10) dans une configuration de sécurité consiste à :
- interrompre (120) la retransmission, par le contrôleur (40n), du premier signal pilote (LP_{Up}), et,
- ouvrir, suite à la perte de la réception du premier signal pilote par la seconde unité pilote (51n), le disjoncteur (62n) pour isoler la ligne de phase (22n) de la source (20n) de puissance.

10. Procédé selon la revendication 9, dans lequel l'étape de déclenchement du repli du système (10) dans une configuration de sécurité consiste, après avoir ouvert le disjoncteur rapide (62n), à fermer (170), par la seconde unité pilote (51n), un court-circuiteur (61n) de connexion d'une borne de neutre de la source (20n) de puissance à la ligne de phase (22n).

11. Procédé selon la revendication 9 ou 10, dans lequel l'étape de déclenchement du repli du système (10) dans une configuration de sécurité consiste également à :
- interrompre (150), par la seconde unité pilote (51n), l'émission d'un second signal pilote (LP_{Down}), et
- commander, lors de la perte du second signal pilote, la fermeture (160), par chaque contrôleur (40n) de la pluralité de contrôleurs destinés à recevoir le second signal pilote, des premier et second transistors (31n, 32n) associés.

12. Procédé selon la revendication 10, dans lequel l'étape de déclenchement du repli du système dans une configuration de sécurité consiste à fermer au moins un contacteur statique associé au court-circuiteur et permettant de connecter une borne de neutre de la source (20n) de puissance à la ligne de phase (22n) plus rapidement que le court-circuiteur, après avoir basculé dans l'état ouvert le disjoncteur (62n).

## Patentansprüche

1. System zur Energieversorgung über den Boden (10), aufweisend:
- eine Neutral-Spur (11n) und eine Phasen-Spur, welche auf Höhe einer Fahrbahn eingebaut sind, wobei die Phasen-Spur aus einer Mehrzahl an leitenden Segmenten (12n bis 12n+7), welche aufeinanderfolgend angeordnet sind, gebildet ist,
- eine elektrische Energiequelle (20n), welche mit einer Neutral-Leitung (21n) und einer Phasen-Leitung (22n), welche entlang der Straße verlaufen, verbunden ist,
- eine Schaltvorrichtung (30n), welche, für die Versorgung eines zugehörigen leitenden Segments (12n), einen ersten Schalter (31n) zur Verbindung des leitenden Segments (12n) mit der Neutral-Leitung (21n), einen zweiten gesteuerten Schalter (32n) zur Verbindung des leitenden Segments (12n) mit der Phasen-Leitung (22n), und eine Steuereinrichtung (40n) zum Steuern eines Offen- oder Geschlossen-Zustands des ersten und des zweiten Schalters, aufweist,
wobei die Steuereinrichtung (40n) dazu geeignet ist, zu jedem Zeitpunkt eine Bedingung, gemäß welcher das zugehörige leitende Segment (12n) mit der Neutral-Leitung (21n) verbunden ist, wenn besagtes leitendes Segment (12n) für die Durchfahrt eines Fahrzeugs nicht elektrifiziert sein darf, zu überprüfen, und die Steuereinrichtung (40n) im Falle einer negativen Überprüfung der besagten Bedingung dazu geeignet ist, das Zurückfallen des Systems (10) in eine Sicherheitskonfiguration auszulösen,
**gekennzeichnet dadurch, dass** in der Sicherheitskonfiguration die Neutral- und die Phasen-Leitung auf das Potential der Neutral-Leitung gelegt sind.

2. System zur Energieversorgung über den Boden (10) gemäß dem Anspruch 1, wobei jede Steuereinrichtung (40n) einen Ausgangsanschluss (41n), welcher mit dem leitenden Segment (12n) verbunden ist, zu dem er gehört, und einen Eingangsanschluss (43n), welcher mit der Neutral-Leitung (21n) verbunden ist, aufweist und für das Überprüfen der besagten Bedingung dazu geeignet ist, periodisch ein Testsignal (Mn) auf dem Ausgangsanschluss auszusenden und den Empfang des Testsignals an dem Eingangsanschluss zu prüfen, wobei der Empfang des Testsignals angibt, dass das zugehörige leitende Segment mit der Neutral-Leitung verbunden ist.

3. System zur Energieversorgung über den Boden (10) gemäß dem Anspruch 1 oder dem Anspruch 2, wobei die Steuereinrichtungen von leitenden Segmenten einer Gruppe an leitenden Segmenten in Reihe entlang einer ersten Pilotleitung zwischen einer ersten Piloteinheit (50n) zum Aussenden eines ersten Pilotsignals (LP_{Up}) und einer zweiten Piloteinheit (51n) zum Empfangen des ersten Pilotsignals geschaltet sind, wobei jede Steuereinrichtung (40n) dazu geeignet ist, die erneute Weiterleitung des ersten Pilotsignals (LPup) zu unterbrechen, sobald die Überprüfung der besagten Bedingung negativ ist, und wobei das System ferner einen Schutzschalter (62n) zur Verbindung der Phasen-Leitung mit einem Phasenanschluss der Energiequelle (20n) aufweist, wobei die zweite Piloteinheit (51n) dazu geeignet ist, einen Offen- oder Geschlossen-Zustand des Schutzschalters zu steuern, wobei die zweite Piloteinheit (51n) dazu eingerichtet ist, den Schutzschalter (62n) in den Offen-Zustand zu schalten, wenn sie das erste Pilotsignal (LPup) nicht mehr empfängt.

4. System zur Energieversorgung über den Boden (10) gemäß dem Anspruch 3, aufweisend einen Überbrückungsschalter (61n) zur Verbindung eines Neutralanschlusses der Energiequelle (20n) mit der Phasen-Leitung (22n), wobei die zweite die zweite Piloteinheit (51n) dazu geeignet ist, einen Offen- oder Geschlossen-Zustand des Überbrückungsschalters zu steuern, wobei die zweite Piloteinheit (51n) dazu geeignet ist, den Überbrückungsschalter (61n) in den Geschlossen-Zustand zu schalten, nachdem der Schutzschalter (62n) in den Offen-Zustand geschaltet wurde.

5. System zur Energieversorgung über den Boden (10) gemäß dem Anspruch 3 oder 4, wobei die Steuereinrichtungen (40n bis 40n+3) von leitenden Segmenten der Gruppe an leitenden Segmenten entlang einer zweiten Pilotleitung mit der zweiten Piloteinheit (51n) parallel geschaltet sind, wobei die zweite Piloteinheit dazu geeignet ist, ein zweites Pilotsignals (LP_{Down}) auf der zweiten Pilotleitung auszusenden, und wobei die zweite Piloteinheit (51n) bei Verlust des ersten Pilotsignals (LP_{Up}) dazu geeignet ist, das Senden des zweiten Pilotsignals zu unterbrechen, und jede Steuereinrichtung (40n bis 40n+3) von leitenden Segmenten der Gruppe an leitenden Segmenten bei Verlust des zweiten Pilotsignals dazu geeignet sind, das Schließen des zugehörigen ersten und zweiten Schalters so zu steuern, dass die Phasen-Leitung (22n) auf das Potential der Neutral-Leitung (21n) gelegt wird.

6. System zur Energieversorgung über den Boden (10) gemäß dem Anspruch 4, wobei der Überbrückungsschalter mit mindestens einer statischen Komponente in Verbindung steht, welche das Verbinden eines Neutralanschlusses der Energiequelle (20n) mit der Phasen-Leitung (22n) schneller als der Überbrückungsschalter gestattet, und wobei die zweite Piloteinheit (151n) dazu geeignet ist, das Schalten der statischen Komponenten in den Geschlossen-Zustand zu steuern, nachdem der Schutzschalter (62n) in den Offen-Zustand geschaltet wurde, vorteilhafterweise zur selben Zeit, zu welcher sie das Schalten des Überbrückungsschalter in den Geschlossen-Zustand steuert.

7. Verfahren zum Sichern eines Systems zur Energieversorgung über den Boden (10), welches irgendeinem der Ansprüche 1 bis 6 entspricht, wobei das Verfahren die Schritte aufweist, bestehend aus:
periodischem Überprüfen, durch eine Steuereinrichtung (40n), einer Bedingung, gemäß welcher das zugehörige leitende Segment (12n) mit der Neutral-Leitung (21n) verbunden ist, wenn besagtes leitendes Segment (12n) für die Durchfahrt eines Fahrzeugs nicht elektrifiziert sein darf, und, im Falle der negativen Überprüfung der besagten Bedingung,
- Auslösen, durch die Steuereinrichtung (40n), des Zurückfallens des Systems (10) in eine Sicherheitskonfiguration, **gekennzeichnet dadurch, dass** in der Sicherheitskonfiguration die Neutral- und die Phasen-Leitung auf das Potential der Neutral-Leitung gelegt sind.

8. Verfahren gemäß dem Anspruch 7, wobei das Systems zur Energieversorgung über den Boden (10) gemäß dem Anspruch 2 ist, der Schritt der Überprüfung der besagten Bedingung umgesetzt wird durch das Empfangen, durch die Steuereinrichtung (40n), des Testsignals (Mn), was die wirksame Verbindung des zugehörigen Segments (12n) mit der Neutral-Leitung (21n) angibt.

9. Verfahren gemäß dem Anspruch 7 oder dem Anspruch 8, wobei das Systems zur Energieversorgung über den Boden (10) gemäß dem Anspruch 3 ist, der Schritt des Auslösens des Zurückfallens des Systems (10) in eine Sicherheitskonfiguration besteht aus:
- Unterbrechen (120) des Weiterleitens, durch die Steuereinrichtung (40n), des ersten Pilotsignals (LP_{Up}), und
- Öffnen, im Anschluss an den Verlust des Empfangs des ersten Pilotsignals durch die zweite Piloteinheit (51n), des Schutzschalters (62n) zum Isolieren der Phasenleitung (22n) von der Energiequelle (20n).

10. Verfahren gemäß dem Anspruch 9, wobei der Schritt des Auslösens des Zurückfallens des Systems (10) in eine Sicherheitskonfiguration gebildet ist durch, nach dem Öffnen des schnellen Schutzschalters (62n), dem Schließen (170), durch die zweite Piloteinheit (51n), eines Überbrückungsschalters (61n) zur Verbindung eines Neutralanschlusses der Energiequelle (20n) mit der Phasen-Leitung (22n).

11. Verfahren gemäß dem Anspruch 9 oder 10, wobei der Schritt des Auslösens des Zurückfallens des Systems (10) in eine Sicherheitskonfiguration außerdem gebildet ist durch:
- Unterbrechen (150), durch die zweite Piloteinheit (51n), des Aussendens eines zweiten Pilotsignals (LP_{Down}), und
- Befehlen, bei Verlust des zweiten Pilotsignals, des Schließens (160), durch jede Steuereinrichtung (40n) von mehreren Steuereinrichtungen, welche dazu bestimmt sind, das zweite Pilotsignal zu empfangen, von zugehörigen ersten und zweiten Transistoren (31n, 32n).

12. Verfahren gemäß dem Anspruch 10, wobei der Schritt des Auslösens des Zurückfallens des Systems in eine Sicherheitskonfiguration gebildet ist durch das Schließen von mindestens einem statischen Schalter, welcher mit dem Überbrückungsschalter in Verbindung steht und welcher das Verbinden eines Neutralanschlusses der Energiequelle (20n) mit der Phasen-Leitung (22n) schneller als der Überbrückungsschalter gestattet, nachdem der Schutzschalter (62n) in den Offen-Zustand geschaltet wurde.

## Claims

1. Ground-level power supply system (10) comprising:
- a neutral track (11n) and a phased track which are implanted in a road, the phased track being composed of a plurality of segments (12n to 12n+7) which are conductive and arranged one after the other;
- a power source (20n) which is connected to a neutral line (21n) and to a phased line (22n) running along the road;
- a switching device (30n) comprising, for supplying power to an associated conductive segment (12n), a first switch (31n) for connecting said conductive segment (12n) to the neutral line (21n), a second controlled switch (32n) for connecting said conductive segment (12n) to the phased line (22n), and a controller (40n) for commanding an open or closed state of the first and second switches,
wherein the controller (40n) is capable of verifying, at any time, a condition according to which the associated conductive segment (12n) is connected to the neutral line (11n) when said conductive segment (12n) does not have to be electrified for the passage of a vehicle, and, in the case of negative verification of said condition, the controller (40n) is capable of triggering the fallback of the system (10) into a safety configuration,
**characterised in that**, in the safety configuration, the neutral and phased lines are placed at the potential of the neutral line.

2. Ground-level power supply system (10) according to claim 1, wherein each controller (40n) comprises an output port (41n) connected to the conductive segment (12n) with which it is associated and an input port (43n) connected to the neutral line (21n), and is capable, in order to verify said condition, of periodically transmitting a test signal (Mn) at the output port and of verifying the receiving of the test signal at the input port, the receiving of the test signal indicating that the associated conductive segment is connected to the neutral line.

3. Ground-level power supply system (10) according to claim 1 or claim 2, wherein the controllers of the conductive segments of a group of conductive segments are connected in series along a first pilot line between a first pilot unit (50n) for transmitting a first pilot signal (LP_{Up}) and a second pilot unit (51n) for receiving the first pilot signal, each controller (40n) being capable of interrupting the retransmission of the first pilot signal (LP_{Up}) as soon as the verification of said condition is negative, and wherein the system further comprises a circuit breaker (62n) for connecting the phased line to a phased terminal of the power source (20n), the second pilot unit (51n) being capable of commanding an open or closed state of the circuit breaker, the second pilot unit (51n) being configured to switch the circuit breaker (62n) into the open state when it no longer receives the first pilot signal (LP_{Up}).

4. Ground-level power supply system (10) according to claim 3, comprising a short-circuiting switch (61n) for connecting a neutral terminal of the power source (20n) to the phased line (22n), the second pilot unit (51n) being capable of commanding an open or closed state of the short-circuiting switch, the second pilot unit (51n) being capable of switching the short-circuiting switch (61n) into the closed state after it has switched the circuit breaker (62n) into the open state.

5. Ground-level power supply system (10) according to claim 3 or 4, wherein the controllers (40n to 40n+3) of the conductive segments of a group of conductive segments are connected in parallel along a second pilot line to the second pilot unit (51n), the second pilot unit being capable of transmitting a second pilot signal (LP_{Down}) on the second pilot line and, when the first pilot signal (LP_{Up}) is lost, the second pilot unit (51n) is capable of interrupting the transmission of the second pilot signal, and each controller (40n to 40n+3) of the conductive segments of the group of conductive segments, when the second pilot signal is lost, being capable of commanding the associated first and second switches to close so as to bring the phased line (22n) to the potential of the neutral line (21n).

6. Ground-level power supply system (10) according to claim 4, wherein the short-circuiting switch is associated with at least one solid state component, allowing a neutral terminal of the power source (20n) to be connected to the phased line (22n) more rapidly than the short-circuiting switch, and wherein the second pilot unit (51n) is capable of commanding the switching of the solid state component into the closed state after it has switched the circuit breaker (62n) into the open state, advantageously at the same time as it commands the switching of the short-circuiting switch into the closed state.

7. Method for making safe a ground-level power supply system (10) according to any one of claims 1 to 6, wherein said procedure comprises steps consisting in:
- periodically verifying (105), by a controller (40n), a condition according to which the associated conductive segment (12n) is connected to the neutral line (21n) when said conductive segment (12n) does not have to be electrified for the passage of a vehicle; and, in the event of negative verification of said condition;
- triggering, by the controller (40n), the fallback of the system (10) into a safety configuration, **characterised in that**, in the safety configuration, the neutral and phased lines are placed at the potential of the neutral line.

8. Method according to claim 7, wherein, the ground-level power supply system being in accordance with claim 2, the step of verifying said condition is carried out by the receiving, by the controller (40n), of the test signal (Mn) indicating the effective connection of the associated segment (12n) to the neutral line (21n).

9. Method according to claim 7 or claim 8, wherein, the ground-level power supply system being in accordance with claim 3, the step of triggering the fallback of the system (10) into a safety configuration consists in:
- interrupting (120) the retransmission, by the controller (40n), of the first pilot signal (LP_{Up}), and
- opening, following the loss of receiving of the first pilot signal by the second pilot unit (51n), the circuit breaker (62n) in order to isolate the phased line (22n) from the power source (20n).

10. Method according to claim 9, wherein the step of triggering the fallback of the system (10) into a safety configuration consists, after the rapid circuit breaker (62n) has been opened, in closing (170), by the second pilot unit (51n), a short-circuiting switch (61n) for connecting a neutral terminal of the power source (20n) to the phased line (22n).

11. Method according to claim 9 or 10, wherein the step of triggering the fallback of the system (10) into a safety configuration also consists in:
- interrupting (150), by the second pilot unit (51n), the transmission of a second pilot signal (LP_{Down}), and
- commanding, when the second pilot signal is lost, the closing (160), by each controller (40n) of the plurality of controllers which are to receive the second pilot signal, the associated first and second transistors (31n, 32n).

12. Method according to claim 10, wherein the step of triggering the fallback of the system into a safety configuration consists in closing at least one solid state contactor associated with the short-circuiting switch and allowing a neutral terminal of the power source (20n) to be connected to the phased line (22n) more rapidly than the short-circuiting switch, after having switched the circuit breaker (62n) into the open state.
